# EUROPÄISCHE PATENTSCHRIFT

(11) **EP 2 545 762 B1**
(45) Veröffentlichungstag und Bekanntmachung des Hinweises auf die Patenterteilung: **08.07.2015**
(21) Anmeldenummer: 12166989.9
(22) Anmeldetag: 07.05.2012
(51) Int. Cl.: A01D 45/02, G01N 29/04

(54) **Vorsatzgerät für einen selbstfahrenden Mähdrescher zum Ernten von stängelartigem Erntegut**
Auxiliary device for a self-propelled combine harvester for harvesting stalk crops
Appareil adaptable pour une moissonneuse-batteuse autotractée destinée à la récolte de produits agricoles en forme de tiges

(30) Priorität: 12.07.2011 DE 102011051792
(43) Veröffentlichungstag der Anmeldung: 16.01.2013
(73) Patentinhaber: CLAAS Selbstfahrende Erntemaschinen GmbH, 33428 Harsewinkel (DE)
(72) Erfinder: Lütke Harmann, Tim, 48324 Sendenhorst (DE); Aerdker, Bernhard, 48231 Warendorf-Milte (DE)

(56) Entgegenhaltungen:
- EP-A1- 0 896 789
- EP-A1- 1 106 049
- DE-A1-102005 021 792
- DE-A1-102009 051 053

## Beschreibung

Die Erfindung betrifft ein Vorsatzgerät für einen selbstfahrenden Mähdrescher zum Ernten von stängelartigem Erntegut, wie Mais oder Sonnenblumen, mit mehreren nebeneinander angeordneten Einzugseinrichtungen, die um eine im Wesentlichen vertikale Drehachse rotierende Fördersterne aufweisen, sowie mit den Einzugseinrichtungen in Richtung des Erntegutflusses nachgeordneten Pflückeinrichtungen, die horizontal und quer zur Fahrtrichtung verlaufende Pflückwalzen aufweisen, sowie mit einem mit gegenläufigen Schneckenabschnitten versehenen Querförderer, über welchen geerntete Maiskolben oder Fruchtstände von Sonnenblumen mittig des Vorsatzgerätes zusammenführbar und dort einem Schrägförderer zuführbar sind, wobei die Fördersterne der einzelnen Einzugseinrichtungen an ihrem Außenumfang radial verlaufende, abschnittsweise in Führungskanäle eingreifende Mitnehmer zur Aufnahme und Förderung von Maispflanzen oder Sonnenblumen aufweisen, wobei die Führungskanäle in ihrem Eintrittsbereich im Wesentlichen in Fahrtrichtung ausgerichtet und in ihrem Austrittsbereich in Richtung eines zwischen den Pflückwalzen ausgebildeten Pflückspaltes verlaufen.

Die Hackfrucht Mais wird als Reihenkultur mit einem im Wesentlichen gleichbleibenden Reihenabstand angebaut, wobei die Aussaat mittels Einzelkornsaat erfolgt und die ausgewachsenen Maispflanzen eine Wuchshöhe von bis zu drei Metern erreichen. Dabei besteht die Maispflanze im Wesentlichen aus einem Maisstängel, bis zu einem Meter langen Maisblättern sowie Fruchtständen, die als von Hüllblättern umschlossene Maiskolben ausgebildet sind. Es gibt zwei wesentliche Arten der Maisernte, nämlich zum Einen die Ernte mittels eines Maishäckslers, mit dem die gesamte Maispflanze einschließlich der Maiskörner zerkleinert wird, um diese anschließend in Form von Silomais als Futtermittel zu verwenden. In dieser zerkleinerten Form kann die Maispflanze auch als Biomasse Biogasanlagen zugeführt werden. Die für die Ernte der Maispflanzen verwendeten Maishäcksler verarbeiten, wie bereits dargelegt, die gesamte Maispflanze, so dass der Fruchtstand, also der die Maiskörner aufnehmende Maiskolben nicht von den übrigen Pflanzenbestandteilen entfernt werden muss. Demgegenüber wird bei der Ernte von Körnermais ein Mähdrescher eingesetzt, der in der Regel anstelle seines für eine Getreideernte üblichen Schneidwerks mit einem Vorsatzgerät für die Mais- oder Sonnenblumenernte versehen ist. Dieses Vorsatzgerät sorgt für einen kontrollierten Einzug der gesamten Pflanze in eine Pflückeinrichtung, in welcher die Fruchtstände von den Stängeln der Pflanze entfernt und anschließend über einen Schrägförderer einem Dreschwerk des Mähdreschers zugeführt werden.

Es gibt dabei Vorsatzgeräte, die ausschließlich für eine reihenabhängige Ernte der Maispflanzen geeignet sind, das heißt, die einzelnen Einzugseinrichtungen sind entsprechend dem Reihenabstand einzustellen, und der Mähdrescher muss mit dem Vorsatzgerät orientiert nach diesen Reihen betrieben werden. Daher ist bereits versucht worden, durch unterschiedliche Lösungen einen reihenunabhängigen Erntevorgang, bei dem die Erntemaschine nicht exakt der Reihenkultur folgen muss, zu ermöglichen. Bei derartigen Lösungen haben sich bislang erhebliche Probleme ergeben, denn es muss gewährleistet werden, dass die Maispflanzen, die nicht in einer entsprechenden kontinuierlich zur jeweiligen Einzugseinrichtung verlaufenden Reihe von dieser erfasst und anschließend den nachgeschalteten Pflückeinrichtungen zugeführt werden. Hierdurch sollen ein möglichst kontinuierlicher Erntegutstrom verarbeitet und ein hoher Erntegutdurchsatz erzielt werden. Eine entsprechende Erntevorrichtung mit einem in dieser Weise ausgebildeten Vorsatzgerät ist Gegenstand der Erfindung. Dieses Vorsatzgerät soll allerdings mit den gleichen Vorteilen auch für eine reihenabhängige Körnermaisernte geeignet sein.

Während des Pflückvorgangs wird der Stängel der Pflanze in Richtung des Bodens gezogen, wobei er während dieser Bewegung über eine eventuell vorhandene Häckselvorrichtung zerkleinert und auf dem Feld abgelegt wird. Darüber hinaus bestehen aber auch Möglichkeiten, ein Mulchgerät unterhalb des Schrägförderers des Mähdreschers vorzusehen oder dieses Mulchgerät am Heck des Mähdreschers anzuordnen. Darüber hinaus kann natürlich das aus dem Maisstängel und den Blattanteilen bestehende Maisstroh in einem anschließenden separaten Bearbeitungsvorgang mittels einer von einem Ackerschlepper angetriebenen Einrichtung zerkleinert werden, damit es besser in den Boden eingearbeitet und in diesem verteilt werden kann.

Ein für eine Körnermaisernte vorgesehenes Vorsatzgerät für einen Mähdrescher der im Oberbegriff des Patentanspruchs 1 genannten Gattung ist aus der DE 10 2009 051 053 A1 bekannt. Über dessen Breite sind mehrere Einzugseinrichtungen verteilt angeordnet, die, jeweils zueinander beabstandet, Führungskanäle bilden. Dabei weist jede dieser Einzugseinrichtungen mehrere rotierende Fördersterne auf, die auf im Wesentlichen vertikalen Drehachsen angeordnet sind und die Maispflanze an ihrem Maisstängel erfassen und anschließend durch den jeweiligen Führungskanal transportieren. Außerdem sind unterschiedliche Gruppen von Einzugseinrichtungen mit entsprechend unterschiedlichen Anordnungen der Fördersterne vorgesehen. Eine mittig des Vorsatzgerätes angeordnete Einzugseinrichtung und beidseitig dieser positionierte Einzugseinrichtungen wirken zusammen. Sie erfassen die Maispflanzen und fördern diese durch die beiden Führungskanäle in deren Endabschnitte, die bezogen auf die mittlere Einzugseinrichtung beziehungsweise die Mitte des Vorsatzgerätes nach außen weisen. Bei dem bekannten Vorsatzgerät sind nur vier Guteintrittsöffnungen vorgesehen und zur Vergrößerung der Arbeitsbreite des Vorsatzgerätes müssten anstelle der einzelnen außenliegenden Fördersterne wiederum Einzugseinrichtungen vorgesehen werden, die der Ausbildung der mittig angeordneten Einzugseinrichtung entsprächen. Auch in diesem Fall würde der Erntegutstrom wieder von den dadurch gebildeten Führungskanälen in seinem Endabschnitt nach außen gefördert.

Eine ähnliche Anordnung von Einzugseinrichtungen eines Vorsatzgerätes für die Ernte von Körnermais ist aus der DE 10 2005 021 792 A1 bekannt. Dabei weist allerdings jede der Einzugseinrichtungen zwei gegenläufig angetriebene Fördersterne auf. Die beidseitig einer Längsmittelebene angeordneten Einzugseinrichtungen sorgen ebenfalls für einen Transport der mittig zugeführten Maispflanzen nach außen.

Weiterhin ist aus der EP 1 106 049 A1 ein Vorsatzgerät bekannt, mit dem ebenfalls ein reihenunabhängiger Erntevorgang ermöglicht werden soll. Dabei besteht jede der Einzugseinrichtungen aus gleichsinnig angetriebenen Einzugseinrichtungen mit oberen und unteren Zinkenkreiseln, die in ihren jeweiligen Endbereichen in unterschiedlichen Richtungen gekrümmt sind. Neben jedem dieser Zinkenkreisel ist eine sich in Fahrtrichtung erstreckende Pflückeinrichtung angeordnet, von deren Pflückplatten aus die geernteten Maiskolben einem nachfolgenden Querförderer zugeführt werden. Die Maisstängel sowie die Maisblätter, die durch den Pflückspalt hindurchgezogen werden, gelangen dabei in einen unterhalb der Pflückplatten liegenden Häcksler, der diese Bestandteile zerkleinert und auf dem Feld ablegt.

Es ist Aufgabe der vorliegenden Erfindung, ein Vorsatzgerät der vorgenannten Gattung derart weiterzubilden, dass ein optimaler Strom der stängelförmigen Pflanzen sowohl durch die einzelnen Einzugseinrichtungen als auch die diesen nachfolgenden Pflückeinrichtungen sowie eine optimale Abführung der von der Pflanze entfernten Fruchtständen erfolgen kann. Dabei sollen die baulichen Abmessungen des Vorsatzgerätes gegenüber bekannten Lösungen nicht vergrößert sondern unter Umständen sogar verringert werden.

Diese Aufgabe wird, ausgehend vom Oberbegriff des Patentanspruchs 1 in Verbindung mit dessen kennzeichnenden Merkmalen gelöst. Gemäß dem kennzeichnenden Teil des Patentanspruchs 1 sollen die Führungskanäle mit Endabschnitten versehen sein, die das stängelartige Erntegut in Richtung der Mitte des Vorsatzgerätes führen. Durch die gezielte Lenkung des Erntegutes wird eine optimierte Abführung der von der Pflanze entfernten Fruchtstände erreicht. Das Auftreten von Stauungen im Erntegutfluss wird auf diese Weise reduziert.

Insbesondere kann eine mittig des Vorsatzgerätes angeordnete zentrale Einzugseinrichtung mit beidseitig dieser verlaufenden Führungskanälen versehen sein, deren die Pflanze in die Pflückeinrichtung leitenden Endabschnitte in Richtung der Mitte des Vorsatzgerätes beziehungsweise in Förderrichtung des Querförderers gerichtet sind, wobei die der zentralen Einzugseinrichtung zugeordnete Pflückeinrichtung im der Fahrtrichtung abgewandten Bereich der zentralen Einzugseinrichtung angeordnet ist. Daraus ergibt sich das Konzept eines Gutflusses im, in Strömungsrichtung gesehen, letzten Abschnitt der die zentrale Einzugseinrichtung begrenzenden Führungskanäle und in der darauf folgenden Pflückeinrichtung, die in beiden Fällen mit der Förderrichtung des Querförderers übereinstimmt.

Der als Schnecke ausgebildete Querförderer weist gegenläufige Schneckengänge auf und zieht das auf ihn übertragene Erntegut, nämlich die Fruchtstände, mittig des Vorsatzgerätes zusammen. In dieser Mitte des Vorsatzgerätes befindet sich eine Einzugsöffnung, über welche die Fruchtstände einem vorzugsweise als Kettenförderer ausgebildeten Schrägförderer zugeführt werden. Der Erntegutfluss ist folglich dadurch wesentlich verbessert, dass eine Umlenkung, also eine wesentliche Änderung der Bewegungsrichtung der geförderten Fruchtstände, vermieden wird. Die Fruchststände bewegen sich sowohl im Endabschnitt der beiden Führungskanäle und in den Pflückeinrichtungen gemeinsam mit dem Rest der Pflanze als auch anschließend, getrennt von dieser, oberhalb eines Pflückspaltes stets in Förderrichtung des Querförderers.

Demgegenüber wird nach den Druckschriften DE 10 2009 051 053 A1 und DE 10 2005 021 792 A1 zumindest für die mittig des Vorsatzgerätes vorgesehene Einzugseinrichtung jeweils ein Gutfluss nach außen erzwungen, woraufhin dann der jeweilige Schneckenabschnitt des Querförderers den Maiskolben erfasst und diesem eine Änderung der Bewegungsrichtung aufzwingt. Das gleiche gilt im Wesentlichen auch für die Ausgestaltung eines Vorsatzgerätes nach der EP 1 106 049 A1, denn dort wird insgesamt nur von einem Teil der Kreisel eine Bewegung der Maiskolben bewirkt, die mit der Bewegungsrichtung des Querförderers übereinstimmt. In den in dieser Druckschrift dargestellten Ausführungen mit sechs Einzugsbereichen und Kreiseln werden die Maiskolben nämlich von der Hälfte aller Kreisel entgegen der Förderrichtung des Querförderers transportiert.

Gemäß einer vorteilhaften Ausgestaltung der Erfindung sollen neben der zentralen Einzugseinrichtung sämtliche inneren und äußeren Einzugseinrichtungen mit Führungskanälen versehen sein, deren Endabschnitte in Richtung der Mitte des Vorsatzgerätes beziehungsweise in Förderrichtung des Querförderers ausgerichtet sind und in Pflückeinrichtungen einmünden, die räumlich hinter der jeweiligen weiteren Einzugseinrichtung liegen. Es soll also bei Aneinanderreihung gleich oder unterschiedlich ausgebildeter Einzugseinrichtungen zwischen diesen jeweils ein Führungskanal gebildet werden, der gemeinsam mit der nachfolgenden Pflückeinrichtung stets zur Mitte des Vorsatzgeräts und somit zur Mitte der Erntemaschine hin orientiert ist. Dadurch wird erreicht, dass auch an diesen weiteren Endabschnitten von Führungskanälen ein Gutfluss realisiert werden kann, der mit dem durch den Querförderer erzeugten Gutfluss gleich gerichtet ist.

Eine insgesamt vorteilhafte Gestaltung der zentralen Einzugseinrichtung und eine günstige Förderwirkung kann weiterhin dadurch erzielt werden, dass diese vier rotierende Fördersterne aufweist, deren Drehachsen zueinander auf einem gleichschenkligen Trapez angeordnet sind, wobei ein kurzer Schenkel dieses Trapez in Fahrtrichtung und dessen langer Schenkel in Richtung des Querförderers weisen. Dabei wird üblicherweise auf einer Symmetrieachse der zentralen Einzugseinrichtung ein Halmteiler angeordnet sein, der demzufolge dem kürzeren Schenkel dieses gleichschenkligen Trapezes vorgeordnet ist. Die vorderen Fördersterne erfassen dabei im Einzugsbereich der zentralen Einzugseinrichtung die Pflanzenstängel und bewegen diese gemeinsam mit Fördersternen der benachbarten inneren Einzugseinrichtungen in den jeweiligen Führungskanal. Die beiden jeweils hinten liegenden Fördersterne bewirken eine Umlenkung des Förderstroms in eine Querrichtung, also in Richtung der Mitte der zentralen Einzugseinrichtung. Diese geometrische Gestaltung der Anordnung der Fördersterne lässt einerseits einen sehr kompakten Aufbau dieser zentralen Einzugseinrichtung zu und ermöglicht andererseits, wie nachfolgend noch erläutert werden wird, eine Systembauweise für eine Erweiterung des Vorsatzgerätes um weitere Einheiten von inneren Einzugseinrichtungen. Dadurch entsteht im Prinzip ein kostengünstiges und für eine Serienfertigung geeignetes Baukastensystem.

Weiterhin sollen der zentralen Einzugseinrichtung zwei Paare von Pflückwalzen zugeordnet sein, von denen die jeweils in Fahrtrichtung gesehen, hinten liegende Pflückwalze axial verlängert ist und im Bereich ihrer axialen Verlängerung eine Einzugsschnecke aufweist, die mit einem Teil ihres Außenmantels in den Endabschnitt des Führungskanals eingreift. Da von dem Förderstern, der den jeweiligen Pflanzenstängel in den quer zur Fahrtrichtung verlaufenden gekrümmten Endabschnitt des Führungskanals fördert, der Pflanzenstängel in den hinteren Randbereich des Endabschnitts gedrückt wird, schließt sich hieran das um die Einzugsschnecke verlängerte Ende der hinteren Pflückwalze tangential an. Diese Einzugsschnecke zieht folglich den Stängel in den Pflückspalt ein, so dass an dieser Stelle in entsprechender Weise der Gutfluss unterstützt wird. Die Pflückwalzenpaare, also die vorderen und hinteren Pflückwalzen sollen dabei gleichachsig angeordnet sein. Darüber hinaus besteht natürlich aber auch die Möglichkeit, die Pflückwalzenpaare und somit die beiden Pflückspalten in horizontaler Richtung geringfügig versetzt zueinander anzuordnen. Falls Platzprobleme für die Unterbringung der beiden Pflückeinrichtungen bestehen, können diese auch derart versetzt zueinander verlaufen, dass sie sich in ihrer axialen Erstreckung überlappen. Eine baulich günstige Ausgestaltung der Führungskanäle sowie der Pflückeinrichtungen ergibt sich dadurch, dass die Führungskanäle mittels unterer und oberer Abdeckungen der Fördersterne gebildet werden. Diese Abdeckungen weisen entsprechend gestaltete Randbereiche auf, die die Führung der Pflanzenstängel übernehmen und über die die zur Förderung der Pflanze dienenden Fördersterne abschnittsweise vorragen. Da die untere Abdeckung gleichzeitig die vordere Pflückplatte bildet, geht der entsprechende Führungskanal unmittelbar in den quer zur Fahrtrichtung verlaufenden Pflückspalt über, so dass die Pflanzenstängel ohne Behinderungen in den Pflückspalt, der gemeinsam mit einer hinteren Pflückplatte gebildet wird, gelangen können.

Wie bereits dargelegt, werden am Außenmantel der zentralen Einzugseinrichtung, also innerhalb der entsprechenden Führungskanäle die Pflanzenstängel mit den daran noch befindlichen Fruchtständen jeweils in die entsprechende Pflückeinrichtung bewegt. Die Fruchtstände, die sich von dem Pflanzenstängel trennen, indem der Pflanzenstängel durch den Pflückspalt hindurch nach unten gezogen wird, gelangen auf die hintere und vordere Pflückplatte. In dieser Phase werden die von der Pflanze abgetrennten Fruchtstände aufeinander zu bewegt und müssen dabei eine Bewegung in Richtung der auf dem Querförderer vorgesehenen Schneckengänge ausführen. Zu diesem Zweck ist ein Abweiser vorgesehen, der die Fruchtstände in die entsprechende Richtung leitet. Vorzugsweise soll es sich dabei um einen Abweiser mit einer in Richtung des Querförderers weisenden Spitze, das heißt, um ein Bauelement mit einer etwa dreieckigen Kontor handeln. Die entsprechenden Schenkel dieses eine dreieckige Kontur aufweisenden Abweisers können mit Führungsradien versehen sein. Dieser Abweiser kann aber auch eine andere geometrische Form aufweisen, die zur Leitung der Fruchtstände in Richtung des Querförderers geeignet ist. Dabei bietet es sich weiterhin an, den Bereich des Abweisers zu nutzen um dort eine Haltetraverse vorzusehen, über welche die zentrale Einzugseinrichtung, also die vordere Pflückplatte mit den darauf angeordneten Fördersternen am Vorsatzgerät fixiert ist. Weiterhin besteht die Möglichkeit, den entsprechenden Abweiser unmittelbar an der unteren Abdeckung, also an der vorderen Pflückplatte auszubilden. Somit ergeben sich insgesamt einfache und relativ kostengünstige Ausgestaltungsmöglichkeiten.

Zur Verbesserung des Gutstroms sowie zur Schaffung einer kompakten Ausbildung des Vorsatzgerätes soll die Pflückeinrichtung in allen Fällen, also sowohl für die zentrale als auch die weiteren Einzugseinrichtungen, in Fahrtrichtung gesehen, relativ weit nach hinten verlegt sein. Dadurch befindet sich der Pflückspalt hinter einer gedachten Linie, die sich aus einer Projektion der äußeren Erstreckung der Schnecke des Querförderers auf die Pflückplatten ergibt.

Eine kostengünstige Anordnung wird dadurch ermöglicht, dass dabei die hintere Pflückplatte gleichzeitig einen Teil einer Mulde des Vorsatzgerätes bildet. Wie weiter vorgeschlagen, kann diese hintere Pflückplatte axial verschieblich ausgebildet sein, so dass über eine entsprechende Verstelleinrichtung die Breite des Pflückspalts verstellt werden kann. Es kann sich dabei um eine Verstellung mit hydraulischen, mechanischen oder elektrischen Stellelementen handeln.

Gemäß einer weiteren Ausgestaltung der Erfindung sollen die beiderseits der zentralen Einzugseinrichtung angeordneten inneren Einzugseinrichtungen jeweils eine im Wesentlichen rhomboidförmige Außenkontur aufweisen, wobei sie bezogen auf eine Längsmittelebene des Vorsatzgerätes spiegelbildlich ausgebildet sind und beliebig aneinandergereiht werden können. Daraus resultiert ein Baukastensystem, in welchem zwei im Wesentlichen identische, aber spiegelbildliche Ausgestaltungen dieser inneren Einzugseinrichtungen existieren, mit denen generell eine Förderung der Mais- oder Sonnenblumenpflanze in Richtung der Mittel des Vorsatzgerätes erfolgt. Die Seiten dieser rhomboidförmigen inneren Einzugseinrichtungen sind dabei der zuvor erläuterten Trapezform der zentralen Einzugseinrichtung derart angepasst, dass sich die entsprechenden Führungskanäle ergeben. Das führt letztendlich dazu, dass neben einer entsprechenden Ausbildung einer zentralen Einzugseinrichtung nur zwei spiegelbildlich ausgebildete Varianten für die weiteren Einzugseinrichtungen existieren müssen, wodurch sich insgesamt die Herstellungskosten und die Lagerhaltungskosten erheblich reduzieren lassen.

Für die weiteren Einzugseinrichtungen und die damit verbundenen Pflückeinrichtungen kann der mögliche Durchsatz von Erntegut dadurch erhöht werden, dass an diesen Einheiten die entsprechenden Pflückwalzen verlängert werden. Im Gegensatz zur zentralen Einzugseinrichtung, bei der die beidseitigen Erntegutströme aufeinander zu und durch die Pflückeinrichtungen bewegt werden, wodurch nur ein begrenzter Raum für die Anordnung der beiden Paare von Pflückeinrichtungen zur Verfügung steht, können die Pflückwalzen bei den weiteren Einheiten über deren gesamte Länge ausgebildet sein. Auch an dem bei diesen Einheiten vorgesehenen Pflückspalt soll ein in Richtung des Querförderers verlaufender Abweiser vorgesehen sein, der die von den Pflanzenstängeln entfernten Fruchtstände in den Einzugsbereich des schneckenförmigen Querförderers leitet.

Weitere erfindungsgemäße Merkmale betreffen die Ausgestaltung der Fördersterne. Danach sind die Fördersterne mit Zähnen versehen, die sowohl an ihren Zahnflanken als auch an ihrem Zahnfuß mit einem Radius ausgebildet sind. Dieser Radius kann entweder auf den üblichen Stängeldurchmesser der Pflanzen abgestimmt sein oder er ist so gestaltet, dass der Stängel transportiert wird, ohne dabei abgeknickt zu werden. Eine der Zahnflanken jeder der Zähne soll weiterhin unter einem Winkel zur Längsmittelachse des entsprechenden Fördersterns verlaufen. Diese Neigung der Zahnflanke bewirkt eine entsprechende Neigung der Pflanze während ihres Transports, so dass das die Fruchtstände aufnehmende Ende der Mais- oder Sonnenblumenpflanze in eine günstige Neigung gebracht wird, die einen etwaigen Verlust von Fruchtständen während des Pflückvorgangs verringert.

Dabei kann es sich auch günstig auswirken, wenn die entsprechenden in Kontakt mit dem Pflanzenstängel gelangenden Zahnflanken breiter ausgebildet werden, damit der Pflanzenstängel relativ schonend transportiert werden kann und auf keinen Fall abgeknickt wird. Dieses Problem lässt sich außerdem auch dadurch beseitigen, dass ein entsprechender Übergang von der Zahnflanke in eine Stirnfläche des Fördersterns mit einem Übergangsradius oder mit einer Anfasung, also einer gebrochenen Kante, versehen ist.

Schließlich besteht die Möglichkeit, die Fördersterne mit fertigungstechnisch günstigen Mitteln herzustellen, so dass sich für eine Serienfertigung erhebliche Vorteile ergeben. Zum Einen kann jeder der Fördersterne aus Kunststoff hergestellt sein, und zum Anderen ergibt sich die Möglichkeit, die Fördersterne mittels eines spanlosen Umformprozesses aus Blech herzustellen.

Die Erfindung ist nicht auf die angegebene Kombination der Merkmale des Patentanspruchs 1 und der abhängigen Patentansprüche beschränkt. Es ergeben sich darüber hinaus weitere Möglichkeiten, einzelne Merkmale, insbesondere dann, wenn sie sich aus den Patentansprüchen, der nachfolgenden Beschreibung der Ausführungsbeispiele oder unmittelbar aus der Zeichnung ergeben, miteinander zu kombinieren. Außerdem soll die Bezugnahme der Patentansprüche auf die Zeichnung durch die Verwendung von Bezugszeichen den Schutzumfang der Patentansprüche auf keinen Fall auf die dargestellten Ausgestaltungsbeispiele beschränken.

Weitere Merkmale der Erfindung ergeben sich im Übrigen aus der nachfolgenden Beschreibung sowie aus den Zeichnungen, in denen ein Ausführungsbeispiel der Erfindung vereinfacht dargestellt ist. Es zeigen:
- Figur 1: eine schematisierte Draufsicht auf ein erfindungsgemäßes Vorsatzgerät mit einem Teilschnitt im Bereich von Pflückeinrichtungen, wobei das Vorsatzgerät mit einem Schrägförderer eines Mähdreschers verbunden ist und mehrere Einzugseinrichtungen aufweist,
- Figur 2: eine ebenfalls schematisierte Draufsicht auf das Vorsatzgerät nach Figur 1, in welcher durch Entfernung oberer Abdeckungen Details der Einzugseinrichtungen sichtbar sind,
- Figur 3: in schematisierter Form eine Schnittdarstellung durch eine zentrale Einzugseinrichtung, eine dieser nachgeordneten Pflückeinrichtung und einen Querförderer gemäß Linie III-III in Figur 2,
- Figur 4: eine Detailansicht im Bereich eines zwischen der zentralen Einzugseinrichtung und einer weiteren Einzugseinrichtung gebildeten Einzugskanal,
- Figur 5: eine Detailansicht der zentralen Einzugseinrichtung mit einem zwischen Endabschnitten von dessen Führungskanälen angeordneten Abweiser,
- Figur 6: eine Detailansicht im Bereich eines zwischen weiteren Einzugseinrichtung gebildeten Führungskanals,
- Figur 7: als Detailansicht eine perspektivische Darstellung eines an einem Maisstängel angreifenden Fördersterns und
- Figur 8: als Einzelteil in perspektivischer Darstellung eine weitere Ausführungsform eines Fördersterns.

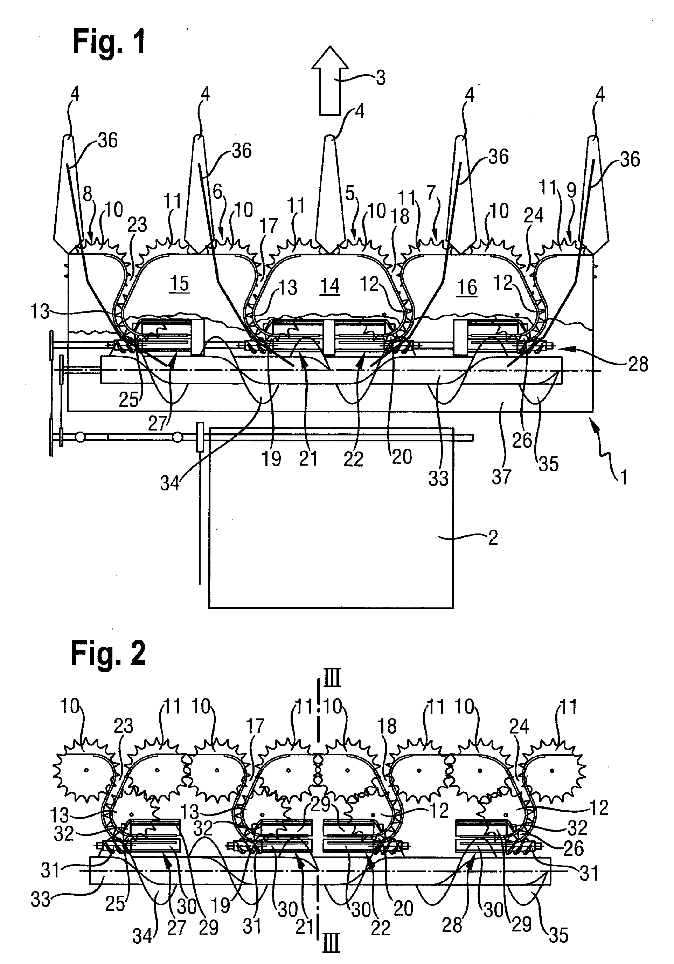

In Figur 1 ist mit 1 ein Vorsatzgerät zum Ernten von Körnermais bezeichnet, das an einen Schrägförderer 2 eines nicht näher dargestellten selbstfahrenden Mähdreschers gekuppelt ist. Dieser Schrägförderer 2 dient dazu, das Erntegut, in diesem Fall die Maiskolben, einem ebenfalls nicht dargestellten Dreschwerk des Mähdreschers, in welchem die Maiskörner während des Dreschvorgangs aus den Kolben gelöst werden, zuzuführen. Während des Erntevorgangs wird dabei das Vorsatzgerät 1 in einer durch einen Pfeil 3 verdeutlichten Fahrtrichtung betrieben.

In seinem vorderen Bereich weist das Vorsatzgerät 1 insgesamt fünf Halmteiler 4 auf, die jeweils einer nachfolgenden Einzugseinrichtung zugeordnet sind. Dabei ist in der Mitte des Vorsatzgerätes 1 eine erste, zentrale Einzugseinrichtung 5 vorgesehen, die eine im Wesentlichen trapezförmige Außenkontur aufweist und mit einer ersten inneren Einzugseinrichtung 6 sowie einer zweiten inneren Einzugseinrichtung 7 zusammenwirkt, die beidseitig dieser zentralen Einzugseinrichtung 5 angeordnet sind. Sowohl die erste innere Einzugseinrichtung 6 als auch die zweite innere Einzugseinrichtung 7 weisen eine im Wesentlichen rhomboidförmige Außenkontur, also die Grundform eines Parallelogrammes auf, wobei sie zueinander spiegelbildlich gestaltet sind. An den beiden äußeren Enden des Vorsatzgerätes 1 sind als Abschluss äußere Einzugseinrichtungen 8 und 9 vorgesehen, die, worauf noch eingegangen werden wird, hinsichtlich ihrer Funktion mit der der inneren Einzugseinrichtungen 6 und 7 übereinstimmen. Jede dieser zwischen den äußeren Einzugseinrichtungen 8 und 9 angeordneten inneren Einzugseinrichtungen 5 bis 7 weist in ihrem vorderen Bereich erste Fördersterne 10 auf, die jeweils im Uhrzeigersinn rotieren und mit zweiten im Gegenuhrzeigersinn rotierenden Fördersternen 11 im Eingriff stehen.

Weiterhin geht aus der Figur 1 in Verbindung mit der Figur 2 hervor, dass die zentrale und die inneren Einzugseinrichtungen 5 bis 7 dritte im Uhrzeigersinn rotierende Fördersterne 12 und/oder vierte im Gegenuhrzeigersinn rotierende Fördersterne 13 aufweisen, die jeweils zur Umlenkung des Gutstroms dienen. Das Vorsatzgerät 1 kann die Pflanzen sowohl reihenabhängig als auch reihenunabhängig ernten, und daher tritt in letzterem Fall unter Umständen keine geordnete Zuführung der Pflanzen auf. Außerdem ist davon auszugehen, dass bei einem reihenunabhängig arbeitenden Vorsatzgerät 1, wie es gemäß dieser Figur 1 zum Einsatz kommen kann, über die jeweiligen Einzugsbereiche mehr als eine Reihe von Pflanzen geerntet wird.

Die mittig des Vorsatzgerätes 1 angeordnete zentrale Einzugseinrichtung 5 weist eine obere Abdeckung 14 auf, die mit oberen Abdeckungen 15 und 16 der inneren Einzugseinrichtung 6 und 7 eine in Fahrtrichtung 3 gesehen, links der zentralen Einzugseinrichtung verlaufenden ersten Führungskanal 17 sowie einen rechts verlaufenden zweiten Führungskanal 18 bilden. Diese Abdeckungen 14, 15 und 16 sind vorzugsweise als Blech- oder Kunststoffelemente hergestellt, wobei sie einen umgebördelten oder in sonstiger Weise verstärkten Rand aufweisen, der jeweils die Führungskanäle 17, 18, 23 und 24 in ihrem oberen Bereich bildet. In den ersten Führungskanal 17 ragen außerdem der erste Förderstern 10 der ersten inneren Einzugseinrichtung 6 und der zweite Förderstern 11 der ersten Einzugseinrichtung 5, wobei diese Fördersterne 10 und 11 den Stängel der jeweiligen Pflanze im vorderen Bereich des ersten Führungskanals 17 erfassen und in diesem soweit bewegen, bis der Pflanzenstängel von dem vierten Förderstern 13 der zentralen Einzugseinrichtung 5 erfasst und in Querrichtung des Vorsatzgerätes 1 umgelenkt wird.

Im zweiten Führungskanal 18 erfolgt die Führung der Pflanze in ähnlicher Weise, wobei hieran der erste Förderstern 10 der zentralen Einzugseinrichtung 5 sowie der zweite Förderstern 11 der zweiten inneren Einzugseinrichtung 7 beteiligt sind. In diesem Fall wird wiederum der Gutstrom durch den dritten Förderstern 12 der zentralen Einzugseinrichtung 5 umgelenkt. Im Anschluss an diese Umlenkung verfügen die Führungskanäle 17 und 18 über Endabschnitte 19 und 20, die in Querrichtung des Vorsatzgerätes 1 und aufeinander zu verlaufen, wie insbesondere der Figur 2 zu entnehmen ist. Dabei mündet der erste Endabschnitt 19 in eine erste Pflückeinrichtung 21 ein, während der zweite Endabschnitt 20 in entgegengesetzter Richtung in eine zweite Pflückeinrichtung 22 führt.

Weitere Führungskanäle 23 und 24 sind jeweils zwischen der ersten inneren Einzugseinrichtung 6 und der zu dieser benachbarten äußeren Einzugseinrichtung 8 sowie der zweiten inneren Einzugseinrichtung 7 und der zu dieser benachbarten äußeren Einzugseinrichtung 9 ausgebildet, wobei der Führungskanal 23 in einen Endabschnitt 25 sowie der Führungskanal 24 in einen Endabschnitt 26 übergehen. Diesen Endabschnitten 25 und 26 sind Pflückeinrichtungen 27 und 28 zugeordnet. Der Figur 2 ist außerdem zu entnehmen, dass diese Endabschnitte 25 und 26 sowie die darauf folgenden Pflückeinrichtungen 27 und 28 ebenfalls in Richtung der Mitte des Vorsatzgerätes 1 ausgerichtet sind. Die in der Figur 2 dargestellten Pflückeinrichtungen 21, 22, 27 und 28 sind im Wesentlichen baugleich ausgebildet, wobei sie über paarweise angetriebene Pflückwalzen 29 und 30 verfügen. Jedes dieser Pflückwalzenpaare setzt sich dabei aus einer vorderen Pflückwalze 29 und einer hinteren Pflückwalze 30 zusammen, wobei die jeweils hintere Pflückwalze 30 axial verlängert ausgebildet ist und dabei mit einer Einzugsschnecke 31 versehen ist. Im Vergleich dazu sind die jeweiligen vorderen Pflückwalzen 29 kürzer ausgebildet und folglich nur mit einer relativ kurzen Einzugsschnecke 32 versehen.

Außerdem sind die Pflückwalzen 29 und 30 an ihrem äußeren Umfang profiliert, um während des Pflückvorgangs den entsprechenden Pflanzenstängel unter das Vorsatzgerät 1 zu transportieren, wo der Pflanzenstängel einer nicht dargestellten Häckselvorrichtung zugeführt oder auf dem Feld abgelegt wird. In letzterem Fall kann unter dem Schrägförderer oder hinter dem Mähdrescher ein Mulchgerät angeordnet sein, das die Stängel und die Blattanteile der Pflanze derart zerkleinert, dass diese nach dem anschließenden Bodenbearbeitungsvorgang im Boden verrotten können.

An die Pflückeinrichtungen 21, 22, 27 und 28 schließt sich ein schneckenförmiger Querförderer 33 an, der gegenläufige Schneckengänge 34 und 35 aufweist, wobei diese links- oder rechtsgewundenen Schneckengänge 34 und 35 bei Antrieb des Querförderers die von den Pflückeinrichtungen 21, 22, 27 und 28 in den Einzugsbereich des Querförderers 33 transportierten Fruchtstände in Richtung der Mitte des Vorsatzgerätes 1 zusammenzieht, wo diese über eine nicht dargestellte Eintrittsöffnung in den Schrägförderer 2 gelangen. Außerdem sind an den außenliegenden Einzugseinrichtungen 6, 7, 8 und 9 jeweils Führungsholme 36 angeordnet, die von deren Halmteilern 4 ausgehen und bis in den Bereich der entsprechenden Pflückeinrichtungen 21, 22, 27 und 28 reichen. Mittels dieser Führungsholme 36 erfährt die relativ lange Pflanze eine Führung in ihrem oberen Bereich, so dass sie durch die Führungskanäle 17, 18, 23 und 24 sicher in einer aufrechten Position bis zu den Pflückeinrichtungen 21, 22, 27 oder 28 geführt wird.

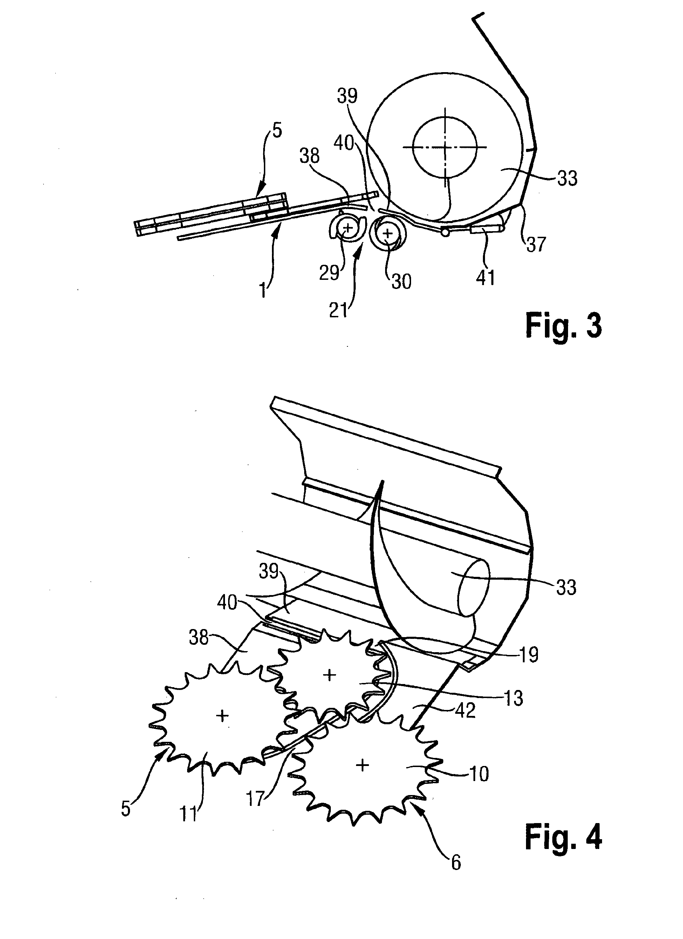

Weitere Details der in den Figuren 1 und 2 dargestellten erfindungsgemäßen Einrichtung sind den nachfolgend erläuterten Figuren 3 bis 8 zu entnehmen, in denen, zumal es sich um die gleiche Ausführung der Erfindung handelt, gleiche Bezugszeichen verwendet werden. Die Figur 3 zeigt in einem schematisierten Schnitt die Anordnung der zentralen Einzugseinrichtung 5 in einem erfindungsgemäßen Vorsatzgerät 1. Dabei ist der Querförderer 33 in einer Schneidwerksmulde 37 angeordnet. Es ist erkennbar, dass die Pflückeinrichtung 21 mit ihrer vorderen und hinteren Pflückwalze 29 bzw. 30 im Wesentlichen innerhalb der radialen Erstreckung des Querförderers angeordnet ist. Dabei befinden sich oberhalb dieser Pflückwalzen 29 und 30 eine vordere Pflückplatte 38 sowie eine hintere Pflückplatte 39, wobei diese Pflückplatten 38 und 39 einen Pflückspalt 40, über den die Pflanzenstängel zwischen den Pflückwalzen 29 und 30 eingezogen werden, begrenzen. Dabei werden die Fruchtstände über die entsprechenden Pflückplatten 38 und 39 von dem Pflanzenstängel getrennt, während letzterer nach unten gezogen wird. Es ist erkennbar, dass die vordere Pflückplatte 38 gleichzeitig eine untere Abdeckung der zentralen Einzugseinrichtung 5 bildet, während die hintere Pflückplatte 39 bis an die Schneidwerksmulde 37 reicht. Dabei befindet sich an der Schneidwerksmulde 37 eine Verstelleinrichtung 41, die an der hinteren Pflückplatte 39 angreift und die hintere Pflückplatte zur Veränderung des Pflückspalts 40 in Längsrichtung verschieben kann.

Die entsprechende Anordnung der beiden Pflückplatten 38 und 39 geht auch aus der Figur 4 hervor, wobei dort der zwischen der zentralen Einzugseinrichtung 5 und der ersten inneren Einzugseinrichtung 6 liegende erste Führungskanal 17 dargestellt ist. Es ist erkennbar, dass auf der vorderen Pflückplatte 38 im vorderen Bereich der zweite Förderstern 11 und im hinteren Bereich ein vierter Förderstern 13 angeordnet sind. Auf einer unteren Abdeckung 42 der benachbarten ersten inneren Einzugseinrichtung 6 ist der erste Förderstern 10 angeordnet, wobei die beiden Fördersterne 10 und 11 die Pflanzen in den ersten Führungskanal 17 einziehen. Der erste Führungskanal 17 geht anschließend an seinem Endabschnitt 19 in den Pflückspalt 40 über.

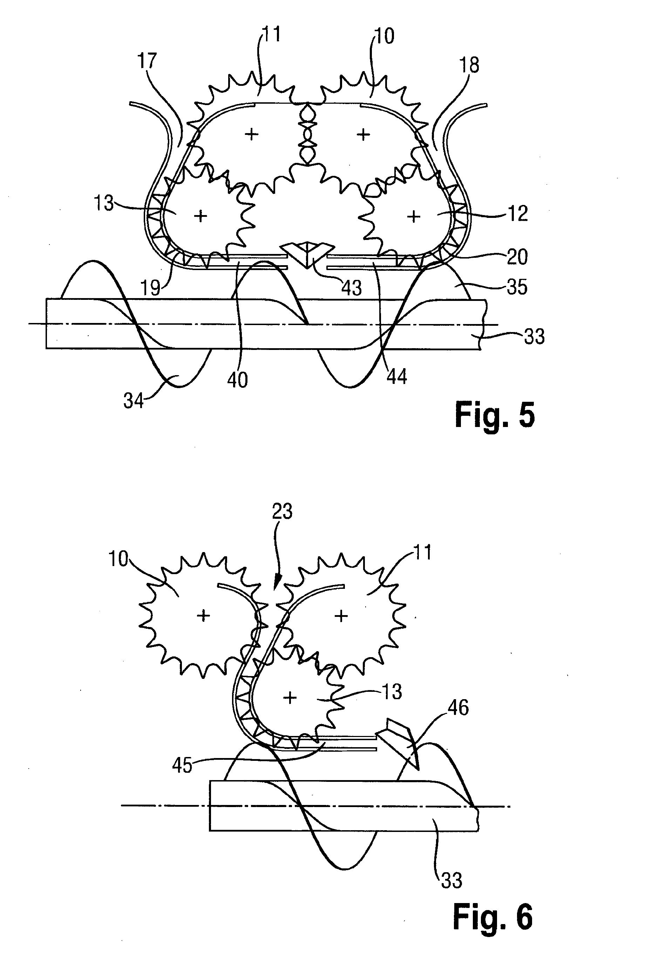

Die Darstellung nach Figur 5 zeigt in vergrößerter Ansicht nochmals die bereits zu Figur 2 erläuterte zentrale Einzugseinrichtung 5, wobei zusätzlich ein in Richtung des Querförderers 33 weisender Abweiser 43 vorgesehen ist. In der Darstellung liegt dem bereits erläuterten Pflückspalt 40 ein weiterer Pflückspalt 44 gegenüber, wobei dieser Pflückspalt 44 mit dem zweiten Führungskanal 18 in Verbindung steht. Dieser Abweiser 43 trennt die beiden Pflückspalten 40 und 44 voneinander und sorgt dafür, dass die von der Pflanze abgepflückten Fruchtstände sicher dem jeweils in die gleiche Richtung fördernden Schneckengang 34 oder 35 des Querförderers 33 zugeführt werden.

In entsprechender Weise ist nach Figur 6 dem Führungskanal 23 und einem sich daran anschließenden Pflückspalt 45 ein weiterer Abweiser 46 zugeordnet, der ebenfalls die Fruchtstände in Richtung des Querförderers 33 lenkt.

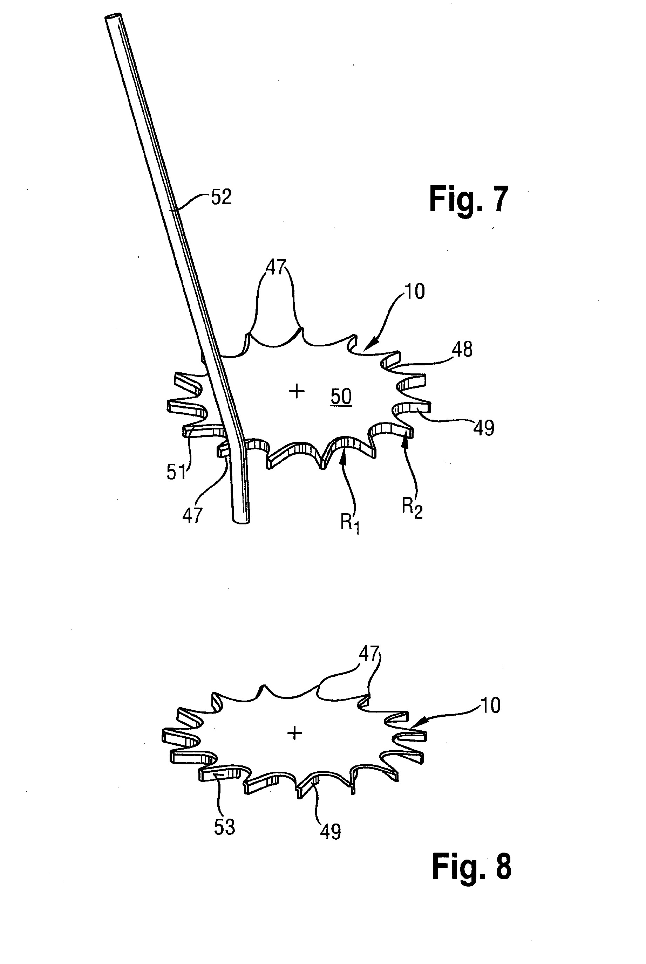

Schließlich geht aus den Figuren 7 und 8 die Ausbildung eines der Fördersterne 10, 11, 12, 13 hervor. Die Figur 7 zeigt, dass ein entsprechendes Förderelement, das beispielsweise als erster Förderstern 10 dient und als Zähne ausgebildete Mitnehmer 47 aufweist. Jeder als Zahn ausgebildete Mitnehmer ist im Bereich seines Zahnfußes 48 mit einem ersten Radius R₁ und im Bereich seiner Zahnflanke 49 mit einem Radius R₂ versehen. Dadurch ist die Zahnflanke 49 im Wesentlichen einer Evolventenverzahnung entsprechend ausgebildet. Weiterhin geht aus der Figur 7 hervor, dass die jeweilige Zahnflanke 49 in ihrem Übergang an eine Stirnfläche 50 des Fördersterns 10 verrundet oder mit einer Kantenbrechung 51 bzw. einer Anfasung versehen ist. Dadurch soll verhindert werden, dass der Pflanzenstängel eventuell stark geknickt wird und dadurch die Fruchtstände bereits vor der Zuführung der kompletten Pflanze zur Pflückeinrichtung 21, 22, 27 oder 28 verloren geht. Die Figur 7 zeigt im Übrigen den ersten Förderstern 10 in seiner Funktion, in der ein entsprechender Pflanzenstängel 52 von der Verzahnung mitgenommen wird.

Nach Figur 8 sollen an den Zahnflanken 49, die aufgrund der Drehrichtung des Fördersterns 10 den Pflanzenstängel mitnehmen, verbreiterte Anlageflächen 53 ausgebildet sein, die ebenfalls für einen schonenden Transport des Pflanzenstängels, das heißt ohne diesen zu knicken, sorgen.

Aus den vorgenannten Figuren geht hervor, dass mittels der vorliegenden Erfindung der jeweils von einer der Einzugseinrichtungen 5 bis 9 sowie nachfolgenden Pflückeinrichtungen 21, 22, 27 oder 28 dem Querförderer 33 zugeführte Gutstrom in einer Richtung transportiert wird, die mit der entsprechenden Förderrichtung des Querförderers 33 übereinstimmt. Dadurch kann der Erntegutfluss erheblich verbessert werden, und es werden gerade bei reihenunabhängigen Pflückeinrichtungen Störungen vermieden.

### Bezugszeichenliste

- 1: Vorsatzgerät
- 2: Schrägförderer
- 3: Pfeil für Fahrtrichtung
- 4: Halmteiler
- 5: zentrale Einzugseinrichtung
- 6: innere Einzugseinrichtung
- 7: innere Einzugseinrichtung
- 8: äußere Einzugseinrichtung
- 9: äußere Einzugseinrichtung
- 10: erste Fördersterne, im Uhrzeigersinn fördernd
- 11: zweite Fördersterne, im Gegenuhrzeigersinn fördernd
- 12: dritte Fördersterne, im Uhrzeigersinn fördernd
- 13: vierte Fördersterne, im Gegenuhrzeigersinn fördernd
- 14: obere Abdeckung von 5
- 15: obere Abdeckung von 6
- 16: obere Abdeckung von 7
- 17: erster Führungskanal links
- 18: zweiter Führungskanal rechts
- 19: Endabschnitt von 17
- 20: Endabschnitt von 18
- 21: erste Pflückeinrichtung
- 22: zweite Pflückeinrichtung
- 23: Führungskanal
- 24: Führungskanal
- 25: Endabschnitt von 23
- 26: Endabschnitt von 24
- 27: Pflückeinrichtung
- 28: Pflückeinrichtung
- 29: vordere Pflückwalzen
- 30: hintere Pflückwalzen
- 31: Einzugsschnecke von 30
- 32: Einzugsschnecke von 29
- 33: Querförderer
- 34: Schneckengang
- 35: Schneckengang
- 36: Führungsholm
- 37: Schneidwerksmulde
- 38: vordere Pflückplatte
- 39: hintere Pflückplatte
- 40: Pflückspalt
- 41: Verstelleinrichtung
- 42: untere Abdeckung
- 43: Abweiser
- 44: Pflückspalt
- 45: Pflückspalt von 24 bzw. 26
- 46: Abweiser
- 47: Mitnehmer
- 48: Zahnfuß
- 49: Zahnflanke
- 50: Stirnfläche
- 51: Kantenbrechung
- 52: Maisstängel
- 53: Anlageflächen

## Patentansprüche

1. Vorsatzgerät (1) für einen selbstfahrenden Mähdrescher zum Ernten von stängelartigem Erntegut mit mehreren nebeneinander angeordneten Einzugseinrichtungen (5, 6, 7, 8 und 9), die um eine im Wesentlichen vertikale Drehachse rotierende Fördersterne (10, 11, 12, 13) aufweisen, sowie mit den Einzugseinrichtungen (5, 6, 7, 8, 9) in Richtung des Erntegutflusses nachgeordneten Pflückeinrichtungen (21, 22, 27,28), die horizontal und quer zur Fahrtrichtung verlaufende Pflückwalzen (29, 30) aufweisen, sowie mit einem mit gegenläufigen Schneckenabschnitten (34, 35) versehenen Querförderer (33), über welchen geerntete Fruchtstände mittig des Vorsatzgerätes (1) zusammenführbar und dort einem Schrägförderer (2) zuführbar sind, wobei die Fördersterne der einzelnen Einzugseinrichtungen an ihrem Außenumfang radial verlaufende, abschnittsweise in Führungskanäle (17, 18, 23, 24) eingreifende Mitnehmer (47) zur Aufnahme und Förderung von Pflanzenstängeln aufweisen, wobei die Führungskanäle (17, 18, 23, 24) in ihrem Eintrittsbereich im Wesentlichen in Fahrtrichtung ausgerichtet und in ihrem Austrittsbereich in Richtung eines zwischen den Pflückwalzen (29 und 30) ausgebildeten Pflückspaltes (40, 44, 45) verlaufen,
**dadurch gekennzeichnet,**
**dass** die Führungskanäle (17, 18, 23, 24) mit Endabschnitten (19, 20, 25, 26) versehen sind, die das stängelartige Erntegut in Richtung der Mitte des Vorsatzgerätes führen.

2. Vorsatzgerät nach Anspruch 1, **dadurch gekennzeichnet, dass** eine mittig des Vorsatzgerätes (1) angeordnete zentrale Einzugseinrichtung (5) mit beidseitig dieser verlaufenden Führungskanälen (17 und 18) versehen ist, deren das stängelartige Erntegut in die Pflückeinrichtung leitenden Endabschnitte (19, 20) in Richtung der Mitte des Vorsatzgerätes (1) beziehungsweise in Förderrichtung des Querförderers (33) gerichtet sind, wobei die dieser zentralen Einzugseinrichtung (5) zugeordneten Pflückeinrichtungen (21, 22) im von der Fahrtrichtung abgewandten Bereich dieser zentralen Einzugseinrichtung (5) angeordnet sind.

3. Vorsatzgerät nach Anspruch 2, **dadurch gekennzeichnet, dass** neben der zentralen Einzugseinrichtung (5) sämtliche inneren und äußeren Einzugseinrichtungen (6, 7, 8, 9) mit Führungskanälen (23, 24) versehen sind, deren Endabschnitte (25, 26) in Richtung der Mitte des Vorsatzgerätes (1) beziehungsweise in Förderrichtung des Querförderers (33) ausgerichtet sind und in Pflückeinrichtungen (27, 28) einmünden, die räumlich hinter der jeweiligen inneren und äußeren Einzugseinrichtung (6, 7, 8, 9) liegen.

4. Vorsatzgerät nach Anspruch 2, **dadurch gekennzeichnet, dass** die zentrale Einzugseinrichtung (5) vier paarweise gegenläufig rotierende Fördersterne (10, 11 bzw. 12, 13) aufweist, deren Drehachsen zueinander auf einem gleichschenkligen Trapez angeordnet sind, wobei ein kurzer Schenkel dieses Trapezes in Fahrtrichtung und dessen langer Schenkel in Richtung des Querförderers (33) weisen.

5. Vorsatzgerät nach Anspruch 2, **dadurch gekennzeichnet, dass** der zentralen Einzugseinrichtung (5) zwei Paare von Pflückwalzen (29, 30) zugeordnet sind, von denen die jeweils, in Fahrtrichtung gesehen, hinten liegende Pflückwalze (30) axial verlängert ist und im Bereich ihrer axialen Verlängerung eine Einzugsschnecke (31) aufweist, die mit einem Teil ihres Außenmantels in den Endabschnitt (19, 20) des Führungskanals (17, 18) eingreift.

6. Vorsatzgerät nach Anspruch 1 oder 2, **dadurch gekennzeichnet, dass** die Führungskanäle (17, 18, 23, 24) durch untere und obere Abdeckungen (14, 15, 16) der Fördersterne (10, 11, 12, 13) gebildet werden, wobei die untere Abdeckung einteilig mit einer vorderen Pflückplatte (38) der Pflückeinrichtung (21, 22, 27, 28) ausgebildet ist.

7. Vorsatzgerät nach Anspruch 6, **dadurch gekennzeichnet, dass** die vordere Pflückplatte (38) gemeinsam mit einer hinteren Pflückplatte (39) einen oberhalb der Pflückwalzen (29, 30) verlaufenden Pflückspalt (40, 44) begrenzt.

8. Vorsatzgerät nach Anspruch 7, **dadurch gekennzeichnet, dass** zwischen den beiden Pflückspalten (40, 44), die hinter der zentralen Einzugseinrichtung (5) ausgebildet sind, ein mit einer Spitze in Richtung des Querförderers weisender Abweiser (43) angeordnet ist.

9. Vorsatzgerät nach Anspruch 8, **dadurch gekennzeichnet, dass** unterhalb des Abweisers (43) eine Haltetraverse für die zentrale Einzugseinrichtung (5) angeordnet ist.

10. Vorsatzgerät nach Anspruch 8, **dadurch gekennzeichnet, dass** der Abweiser (43) an einer Abdeckung der Fördersterne (10, 11, 12, 13) ausgebildet ist.

11. Vorsatzgerät nach Anspruch 7, **dadurch gekennzeichnet, dass** der Querförderer (33) den Pflückspalt (40, 44) radial überragt, wobei die hintere Pflückplatte (39) einen Teil einer Mulde (37) des Vorsatzgerätes (1) bildet.

12. Vorsatzgerät nach Anspruch 7, **dadurch gekennzeichnet, dass** die hintere Pflückplatte (39) mit einer axial wirkenden Verstelleinrichtung (41) zur Verstellung einer Breite des Pflückspaltes (40, 44) versehen ist.

13. Vorsatzgerät nach Anspruch 3, **dadurch gekennzeichnet, dass** die beiderseits der zentralen Einzugseinrichtung (5) angeordneten inneren Einzugseinrichtungen (6, 7) jeweils eine rhomboidförmige Außenkontur aufweisen, wobei sie bezogen auf eine Längsmittelebene des Vorsatzgerätes (1) spiegelbildlich ausgebildet sind und beliebig aneinandergereiht werden können.

14. Vorsatzgerät nach Anspruch 13, **dadurch gekennzeichnet, dass** die inneren Einzugseinrichtungen (6, 7) jeweils drei Fördersterne (10, 11, 12, 13) aufweisen, von denen zwei Fördersterne (10, 11) in den Eintrittsbereich der jeweils benachbarten Führungskanäle (23, 24) eingreifen und gegenläufig rotieren, während ein dritter Förderstern (12, 13) in den Endabschnitt (25, 26) des Führungskanals (23, 24) eingreift.

15. Vorsatzgerät nach Anspruch 2 oder 3, **dadurch gekennzeichnet, dass** Pflückwalzen (29, 30), die den inneren Einzugseinrichtungen (6, 7) zugeordnet sind, im Vergleich zu den mit der zentralen Einzugseinrichtung (5) zusammenwirkenden Pflückwalzen (29, 30) mit größerer axialer Baulänge ausgebildet sind.

16. Vorsatzgerät nach Anspruch 3, **dadurch gekennzeichnet, dass** am Ende eines Pflückspaltes (45), der einer der inneren Einzugseinrichtungen (6, 7) zugeordnet ist, ein in Richtung des Querförderers (33) verlaufender Abweiser (46) vorgesehen ist.

17. Vorsatzgerät nach Anspruch 2 oder 3, **dadurch gekennzeichnet, dass** die Fördersterne mit als Zähne ausgebildeten Mitnehmern (47) versehen sind, die sowohl an ihren Zahnflanken (49) als auch eines zwischen ihnen liegenden Zahnfußes mit einem Radius R₁ beziehungsweise R₂ ausgebildet sind, der auf einen üblichen Stängeldurchmesser von Mais- oder Sonnenblumenpflanzen abgestimmt ist.

18. Vorsatzgerät nach Anspruch 2 oder 3, **dadurch gekennzeichnet, dass** in Förderrichtung gerichtete Zahnflanken (49) von Zähnen der Fördersterne (10, 11, 12, 13) schräg zu einer Längsmittelachse der Fördersterne (10, 11, 12, 13) verlaufen.

19. Vorsatzgerät nach Anspruch 2 oder 3, **dadurch gekennzeichnet, dass** in Förderrichtung gerichtete Zahnflanken (49) von Zähnen der Fördersterne (10, 11, 12, 13) gegenüber deren übriger Wandstärke breiter ausgebildet sind.

20. Vorsatzgerät nach Anspruch 2 oder 3, **dadurch gekennzeichnet, dass** in Förderrichtung gerichtete Zahnflanken (49) von Zähnen zumindest eines der Fördersterne (10, 11, 12, 13) an ihrem jeweiligen Übergang in eine Stirnfläche (50) des Fördersternes (10, 11, 12, 13) mit einem Übergangsradius oder einer Anfasung (51) versehen sind.

## Claims

1. A front attachment (1) for a self-propelled combine harvester for harvesting stalk crop material comprising a plurality of mutually juxtaposed intake devices (5, 6, 7, 8 and 9) having conveyor star members (10, 11, 12, 13) rotating about a substantially vertical axis of rotation, and picking devices (21, 22, 27, 28) which are arranged downstream of the intake devices (5, 6, 7, 8, 9) in the direction of the crop material flow and which have picking rollers (29, 30) extending horizontally and transversely relative to the direction of travel, and a transverse conveyor (33) which is provided with oppositely moving screw portions (34, 35) and by way of which harvested crop stands can be brought together centrally of the front attachment (1) and can there be fed to an inclined conveyor (2), wherein the conveyor star members of the individual intake devices at their outer periphery have radially extending entrainment members (47) engaging portion-wise into guide passages (17, 18, 23, 24) for receiving and conveying plant stalks, wherein the guide passages (17, 18, 23, 24) are oriented substantially in the direction of travel in their inlet region and in their outlet region extend in the direction of a picking gap (40, 44, 45) provided between the picking rollers (29 and 30),
**characterised in that**
the guide passages (17, 18, 23, 24) are provided with end portions (19, 20, 25, 26) which guide the stalk crop material in the direction of the centre of the front attachment.

2. A front attachment according to claim 1 **characterised in that** a central intake device (5) arranged centrally of the front attachment (1) is provided with guide passages (17, 18) which extend on both sides thereof and whose end portions (19, 20) which guide the stalk crop material into the picking device are directed in the direction of the centre of the front attachment (1) or in the conveyor direction of the transverse conveyor (33), wherein the picking devices (21, 22) associated with said central intake device (5) are arranged in the region of said central intake device (5), that faces away from the direction of travel.

3. A front attachment according to claim 2 **characterised in that** besides the central intake device (5) all inner and outer intake devices (6, 7, 8, 9) are provided with guide passages (23, 24) whose end portions (25, 26) are oriented in the direction of the centre of the front attachment (1) or in the conveyor direction of the transverse conveyor (33) and open into picking devices (27, 28) which are disposed spatially behind the respective inner and outer intake devices (6, 7, 8, 9).

4. A front attachment according to claim 2 **characterised in that** the central intake device (5) has four conveyor star members (10, 11 and 12, 13) which rotate in paired relationship in opposite directions and whose axes of rotation are arranged relative to each other on an isosceles trapezium, wherein a short limb of the trapezium faces in the direction of travel and its longer limb faces in the direction of the transverse conveyor (33).

5. A front attachment according to claim 2 **characterised in that** the central intake device (5) has two pairs of picking rollers (29, 30) of which the respective picking roller (30) which is disposed rearwardly viewed in the direction of travel is axially prolonged and in the region of its axial prolongation has an intake screw (31) which engages with a part of its outside peripheral surface into the end portion (19, 20) of the guide passage (17, 18).

6. A front attachment according to claim 1 or claim 2 **characterised in that** the guide passages (17, 18, 23, 24) are formed by lower and upper covers (14, 15, 16) of the conveyor star members (10, 11, 12, 13), wherein the lower cover is formed in one piece with a front picking plate (38) of the picking device (21, 22, 27, 28).

7. A front attachment according to claim 6 **characterised in that** the front picking plate (38) jointly with a rear picking plate (39) defines a picking gap (40, 46) extending above the picking rollers (29, 30).

8. A front attachment according to claim 7 **characterised in that** arranged between the two picking gaps (40, 44) which are provided rearwardly of the central intake device (5) is a deflector (43) facing with a tip in the direction of the transverse conveyor.

9. A front attachment according to claim 8 **characterised in that** arranged beneath the deflector (43) is a transverse holding member for the central intake device (5).

10. A front attachment according to claim 8 **characterised in that** the deflector (43) is provided on a cover of the conveyor star members (10, 11, 12, 13).

11. A front attachment according to claim 7 **characterised in that** the transverse conveyor (33) projects radially beyond the picking gap (40, 44), the rear picking plate (39) forming part of a trough (37) of the front attachment (1).

12. A front attachment according to claim 7 **characterised in that** the rear picking plate (39) is provided with an axially operative adjusting device (41) for adjusting a width of the picking gap (40, 44).

13. A front attachment according to claim 3 **characterised in that** the inner intake devices (6, 7) arranged on both sides of the central intake device (5) respectively have a rhomboidal outside contour, wherein they are of a mirror-image configuration relative to a longitudinal central plane of the front attachment (1) and can be arranged in a row with each other in any way.

14. A front attachment according to claim 13 **characterised in that** the inner intake devices (6, 7) respectively have three conveyor star members (10, 11, 12, 13) of which two conveyor star members (10, 11) engage into the intake region of the respectively adjacent guide passages (23, 24) and rotate in opposite relationship while a third conveyor star member (12, 13) engages into the end portion (25, 26) of the guide passage (23, 24).

15. A front attachment according to claim 2 or claim 3 **characterised in that** picking rollers (29, 30) associated with the inner intake devices (6, 7) are of a greater axial structural length in comparison with the picking rollers (29, 30) cooperating with the central intake device (5).

16. A front attachment according to claim 3 **characterised in that** provided at the end of a picking gap (45) associated with one of the inner intake devices (6, 7) is a deflector (46) extending in the direction of the transverse conveyor (33).

17. A front attachment according to claim 2 or claim 3 **characterised in that** the conveyor star members are provided with entrainment members (47) which are in the form of teeth and which are provided both at their tooth flanks (49) and also a tooth base between them with a radius R₁ and R₂ respectively matched to a normal stalk diameter of corn or sunflower plants.

18. A front attachment according to claim 2 or claim 3 **characterised in that** tooth flanks (49), directed in the conveyor direction, of teeth of the conveyor star members (10, 11, 12, 13) extend inclinedly relative to a longitudinal central axis of the conveyor star members (10, 11, 12, 13).

19. A front attachment according to claim 2 or claim 3 **characterised in that** tooth flanks (49), directed in the conveyor direction, of teeth of the conveyor star members (10, 11, 12, 13) are wider in comparison with the rest of their wall thickness.

20. A front attachment according to claim 2 or claim 3 **characterised in that** tooth flanks (49), directed in the conveyor direction, of teeth of at least one of the conveyor star members (10, 11, 12, 13) are provided at their respective transition into an end face (50) of the conveyor star member (10, 11, 12, 13) with a transitional radius or a bevel (51).

## Revendications

1. Outil frontal (1) pour une moissonneuse-batteuse automotrice destinée à la récolte d'un produit de récolte à tiges, comprenant plusieurs dispositifs d'alimentation (5, 6, 7, 8 et 9) qui sont disposés les uns à côté des autres et qui présentent des étoiles de transport (10, 11, 12, 13) pouvant tourner autour d'un axe de rotation sensiblement vertical, comprenant également des dispositifs de cueillage (21, 22, 27, 28) qui sont placés après les dispositifs d'alimentation (5, 6, 7, 8, 9) par rapport à la direction du flux de produit de récolte et qui présentent des rouleaux cueilleurs (29, 30) s'étendant horizontalement et transversalement au sens de marche, et comprenant un convoyeur transversal (33) pourvu de sections de vis sans fin (34, 35) tournant en sens contraires, au moyen desquelles les épis récoltés peuvent être rassemblés au centre de l'outil frontal (1) et, de là, amenés à un convoyeur incliné (2), les étoiles de transport des différents dispositifs d'alimentation présentant sur leur circonférence extérieure des moyens d'entraînement (47) s'étendant radialement, pénétrant en partie dans des canaux de guidage (17, 18, 23, 24), pour recevoir et transporter les tiges de plantes, les canaux de guidage (17, 18, 23, 24) s'étendant sensiblement dans le sens de marche dans leur zone d'entrée et dans la direction d'une fente de cueillage (40, 44, 45) formée entre les rouleaux cueilleurs (29 et 30) dans leur zone de sortie, **caractérisé en ce que** les canaux de guidage (17, 18, 23, 24) sont pourvus de parties terminales (19, 20, 25, 26) qui guident le produit de récolte à tiges dans la direction du centre de l'outil frontal.

2. Outil frontal selon la revendication 1, **caractérisé en ce qu'**au centre de l'outil frontal (1) est disposé un dispositif d'alimentation central (5) pourvu de canaux de guidage (17 et 18) qui s'étendent des deux côtés de celui-ci et dont les parties terminales (19, 20) guidant le produit de récolte à tiges dans le dispositif de cueillage sont orientées dans la direction du centre de l'outil frontal (1), respectivement dans la direction de transport du convoyeur transversal (33), les dispositifs de cueillage (21, 22) associés à ce dispositif d'alimentation central (5) étant disposés dans la zone de ce dispositif d'alimentation central (5) opposée au sens de marche.

3. Outil frontal selon la revendication 2, **caractérisé en ce que**, en plus du dispositif d'alimentation central (5), tous les dispositifs d'alimentation intérieurs et extérieurs (6, 7, 8, 9) sont pourvus de canaux de guidage (23, 24) dont les parties terminales (25, 26) sont orientées dans la direction du centre de l'outil frontal (1), respectivement dans la direction de transport du convoyeur transversal (33) et débouchent dans des dispositifs de cueillage (27, 28) situés spatialement derrière le dispositif d'alimentation intérieur et extérieur (6, 7, 8, 9) respectif.

4. Outil frontal selon la revendication 2, **caractérisé en ce que** le dispositif d'alimentation central (5) présente quatre étoiles de transport (10, 11, respectivement 12, 13) qui tournent en sens contraire par paires et dont les axes de rotation sont disposés les uns par rapport aux autres sur un trapèze isocèle, un petit côté de ce trapèze étant dirigé dans le sens de marche et son grand côté étant dirigé dans la direction du convoyeur transversal (33).

5. Outil frontal selon la revendication 2, **caractérisé en ce qu'**au dispositif d'alimentation central (5) sont associées deux paires de rouleaux cueilleurs (29, 30) dont le rouleau cueilleur (30) respectif situé à l'arrière par rapport au sens de marche est prolongé axialement et présente, dans la zone de son prolongement axial, une vis d'alimentation (31) qui pénètre par une partie de son enveloppe extérieure dans la partie terminale (19, 20) du canal de guidage (17, 18).

6. Outil frontal selon la revendication 1 ou 2, **caractérisé en ce que** les canaux de guidage (17, 18, 23, 24) sont formés par des recouvrements inférieurs et supérieurs (14, 15, 16) des étoiles de transport (10, 11, 12, 13), le recouvrement inférieur étant réalisé d'une seule pièce avec une plaque cueilleuse avant (38) du dispositif de cueillage (21, 22, 27, 28).

7. Outil frontal selon la revendication 6, **caractérisé en ce que** la plaque cueilleuse avant (38) délimite, conjointement avec une plaque cueilleuse arrière (39), une fente de cueillage (40, 44) s'étendant au-dessus des rouleaux cueilleurs (29, 30).

8. Outil frontal selon la revendication 7, **caractérisé en ce qu'**un déflecteur (43) avec une pointe tournée dans la direction du convoyeur transversal est disposé entre les deux fentes de cueillage (40, 44) formées derrière le dispositif d'alimentation central (5).

9. Outil frontal selon la revendication 8, **caractérisé en ce qu'**une traverse de support pour le dispositif d'alimentation central (5) est disposée sous le déflecteur (43).

10. Outil frontal selon la revendication 8, **caractérisé en ce que** le déflecteur (43) est réalisé sur un recouvrement des étoiles de transport (10, 11, 12, 13).

11. Outil frontal selon la revendication 7, **caractérisé en ce que** le convoyeur transversal (33) surplombe radialement la fente de cueillage (40, 44), la plaque cueilleuse arrière (39) formant une partie d'un auget (37) de l'outil frontal (1).

12. Outil frontal selon la revendication 7, **caractérisé en ce que** la plaque cueilleuse arrière (39) est pourvue d'un dispositif de réglage (41) agissant axialement pour régler une largeur de la fente de cueillage (40, 44).

13. Outil frontal selon la revendication 3, **caractérisé en ce que** les dispositifs d'alimentation intérieurs (6, 7) disposés des deux côtés du dispositif d'alimentation central (5) présentent chacun un contour extérieur rhomboïdal, sont symétriques par rapport à un plan médian longitudinal de l'outil frontal (1) et peuvent être juxtaposés à volonté.

14. Outil frontal selon la revendication 13, **caractérisé en ce que** les dispositifs d'alimentation intérieurs (6, 7) présentent chacun trois étoiles de transport (10, 11, 12, 13) dont deux étoiles de transport (10, 11) pénètrent dans la zone d'entrée des canaux de guidage (23, 24) adjacents respectifs et tournent en sens contraire, tandis qu'une troisième étoile de transport (12, 13) pénètre dans la partie terminale (25, 26) du canal de guidage (23, 24).

15. Outil frontal selon la revendication 2 ou 3, **caractérisé en ce que** les rouleaux cueilleurs (29, 30) associés aux dispositifs d'alimentation intérieurs (6, 7) sont réalisés avec une plus grande longueur de construction axiale que les rouleaux cueilleurs (29, 30) qui coopèrent avec le dispositif d'alimentation central (5).

16. Outil frontal selon la revendication 3, **caractérisé en ce qu'**un déflecteur (46) s'étendant dans la direction du convoyeur transversal (33) est prévu à l'extrémité d'une fente de cueillage (45) associée à un des dispositifs d'alimentation intérieurs (6, 7).

17. Outil frontal selon la revendication 2 ou 3, **caractérisé en ce que** les étoiles de transport sont pourvues de moyens d'entraînement (47) qui sont réalisés sous la forme de dents et sont réalisés aussi bien sur leurs flancs de dent (49) que sur un pied de dent situé entre eux avec un rayon R1, respectivement R2, adapté à un diamètre de tige courant de plants de maïs ou de tournesol.

18. Outil frontal selon la revendication 2 ou 3, **caractérisé en ce que** des flancs de dent (49) orientés dans la direction de transport de dents des étoiles de transport (10, 11, 12, 13) s'étendent obliquement par rapport à un axe médian longitudinal des étoiles de transport (10, 11, 12, 13).

19. Outil frontal selon la revendication 2 ou 3, **caractérisé en ce que** des flancs de dent (49), orientés dans la direction de transport, de dents des étoiles de transport (10, 11, 12, 13) sont plus larges par rapport au reste de leur épaisseur de paroi.

20. Outil frontal selon la revendication 2 ou 3, **caractérisé en ce que** des flancs de dent (49), orientés dans la direction de transport, de dents d'au moins une des étoiles de transport (10, 11, 12, 13) sont pourvus d'un rayon de transition ou d'un chanfrein (51) au niveau de leur transition respective avec une face frontale (50) de l'étoile de transport (10, 11, 12, 13).
